# EUROPÄISCHE PATENTSCHRIFT

(11) **EP 1 885 085 B1**
(45) Veröffentlichungstag und Bekanntmachung des Hinweises auf die Patenterteilung: **06.03.2013**
(21) Anmeldenummer: 06016047.0
(22) Anmeldetag: 01.08.2006
(51) Int. Cl.: H04B 5/00, H04L 12/40, H04L 12/10, H04B 5/02, H04L 25/02, G08C 17/06, H01F 38/14, H02J 5/00, H05K 7/14, G06F 13/40

(54) **Berührungslose Energie- und Datenversorgung von Busteilnehmern**
Contactless means for supplying energy and data to bus users
Alimentation en énergie et en données sans contact pour des participants d un bus

(43) Veröffentlichungstag der Anmeldung: 06.02.2008
(73) Patentinhaber: SIEMENS AKTIENGESELLSCHAFT, 80333 München (DE)
(72) Erfinder: Flach, Manfred, 92224 Amberg (DE); Haible, Jürgen, 90427 Nürnberg (DE); Schmidt, Richard, 91083 Baiersdorf (DE)

(56) Entgegenhaltungen:
- WO-A2-2006/067528
- DE-A1- 10 026 174
- DE-C1- 19 705 301
- US-A- 5 229 652
- US-A1- 2001 024 888

## Beschreibung

Die Erfindung betrifft eine Vorrichtung zur mechanischen Halterung, elektrischen Energieversorgung und Datenversorgung von Busteilnehmern eines Datenbusses. Darüber hinaus betrifft die Erfindung einen Busteilnehmer, der durch eine derartige Vorrichtung mechanisch halterbar und mit elektrischer Energie und Daten versorgbar ist.

Ein typisches Beispiel für derartige Busteilnehmer sind Peripheriemodule aus industriellen Anwendungen, beispielsweise Ein-/Ausgabemodule der Automatisierungstechnik. Derartige Peripheriemodule müssen in der Regel sowohl in elektrischer Hinsicht als auch - speziell in rauen industriellen Umgebungen - bezüglich ihrer Umgebungsbedingungen besondere Anforderungen erfüllen. So ist in elektrischer Hinsicht häufig eine Potentialtrennung zwischen ein- und ausgehenden Signalleitungen und dem Datenverarbeitungs- oder Steuerungssystem erforderlich. In mechanischer Hinsicht müssen häufig spezielle Schutzmaßnahmen gegen Umgebungseinflüsse wie Staub und Feuchtigkeit bis hin zum Schutz für explosionsgefährdete Umgebungen getroffen werden.

Weitere Beispiele für Busteilnehmer, die in der Regel im industriellen Umfeld eingesetzt werden und für die die genannten Vorkehrungen oftmals zu treffen sind, sind Logikeinheiten, Signaleinheiten, Zähleinheiten, Relaiseinheiten, Kleinsteuerungen, Einheiten zur Signaltrennung und Wandlung usw. Derartige Geräte werden in der Regel in Schaltschränken untergebracht. Eine zentrale Steuerungseinheit, beispielsweise eine speicherprogrammierbare Steuerung, kann über den Datenbus mit derartigen Busteilnehmern kommunizieren.

Aufgrund der genannten Anforderungen insbesondere in rauen industriellen Umgebungen werden zum Teil hohe Anforderungen an die Gehäuse und Steckverbindungen derartiger Busteilnehmer gestellt. Beispielsweise stellt der Spritzwasserschutz nach IP 65/67 hohe konstruktive Anforderungen an das Dichtsystem eines derartigen Gehäuses. Die Herstellung der geschützten Geräte ist mit erhöhten Kosten verbunden, da zudem deren Montage fehleranfällig und zeitaufwändig ist. Darüber hinaus ist auch im laufenden Betrieb die Zuverlässigkeit dieser Abdichtungen sowohl im Langzeiteinsatz als auch bei häufigen Wechseln von Modulen oder Anschlussleitungen problematisch. Ferner wird durch Korrosion, Verschmutzung oder mechanische Einflüsse wie Erschütterungen und Vibrationen die Zuverlässigkeit elektrischer Steckverbindungen stark beeinträchtigt.

Um die eingangs erwähnte Potentialtrennung zu realisieren, werden heute in der Regel individuelle Potentialtrennungen zwischen den einzelnen zu trennenden Signalleitungen mit Hilfe von Optokopplern oder ähnlichen Bauelementen bewirkt, die in den abgedichteten Gehäusen untergebracht sind.

Aus DE 29 624 219 U1 ist ein Bussystem zum Übertragen von Daten zwischen nach Art von Klemmen auf einer Tragschiene aneinander gereihten Busteilnehmern bekannt. Die Busteilnehmer weisen je einen Kopplungsein- und Kopplungsausgang für die Datenübertragung auf. Die Kopplungsein- und Ausgänge der Busteilnehmer wirken hierbei als kontaktlos miteinander in Verbindung stehende Sender und Empfänger

Aus der Druckschrift US 5,229,652 ist ein berührungsloser Strom- und Datenstecker bekannt, welche insbesondere für Computermodule wie Speicherkarten und der gleichen Verwendung findet. Der Stecker enthält Wicklungen zur berührungslosen Datenübertragung und davon unterschiedliche Wicklungen zur berührungslosen Stromübertragung, welche in Form von gedruckten Schaltkreisen in mehreren Schichten übereinander gelagert sind, dahingehend dass sich die Signale gegenseitig nicht stören.

DE 100 26 174 zeigt eine Anordnung zur kontaktlosen Koppelung mehrerer externer Einheiten und Übertragung elektrischer Signale mittels kapazitativer Koppelelemente oder Energie welche vorteilhafterweise über induktive Komponenten erfolgt.

Der Erfindung liegt die Aufgabe zugrunde, einen dauerhaft zuverlässigen Betrieb von Busteilnehmern eines Datenbusses auch unter rauen Umgebungsbedingungen zu gewährleisten.

Diese Aufgabe wird durch eine Vorrichtung zur mechanischen Halterung von Busteilnehmern eines Datenbusses gelöst, wobei die Vorrichtung mindestens eine Energieübertragungsschnittstelle zur berührungslosen Energieversorgung mindestens eines der gehalterten Busteilnehmer und mindestens eine Datenübertragungsschnittstelle zur berührungslosen Ankopplung des mindestens einen gehalterten Busteilnehmers an den Datenbus aufweist und die Primärspule zur induktiven Übertragung von Daten zur Sekundärspule vorgesehen ist, so dass die Energieübertragungsschnittstelle die Funktion der Datenübertragungsschnittstelle erfüllt.

Ferner wird die Aufgabe durch einen Busteilnehmer mit Halterungsmitteln zur Halterung des Busteilnehmers an einer Vorrichtung der genannten Art gelöst, wobei der Busteilnehmer
- eine weitere Energieübertragungsschnittstelle aufweist, die mit der Energieübertragungsschnittstelle der Vorrichtung zur berührungslosen Energieübertragung koppelbar ist, und
- eine weitere Datenübertragungsschnittstelle aufweist, die mit der Datenübertragungsschnittstelle der Vorrichtung zur berührungslosen Ankopplung des Busteilnehmers an den Datenbus koppelbar ist und
- der Busteilnehmer eine Datenkopplungsschnittstelle zur berührungslosen Datenübertragung von dem Busteilnehmer zu einem benachbarten gehalterten Busteilnehmer aufweist.

Vorteilhafte Ausführungen der Erfindung sind in den abhängigen Ansprüchen genannt.

Der Erfindung liegt die Erkenntnis zugrunde, dass die einzelnen Busteilnehmer vollständig hermetisch gekapselt und somit in idealer Art und Weise vor Umgebungseinflüssen wie Staub und Feuchtigkeit etc. geschützt werden können, wenn sowohl die Energieübertragung als auch die Datenübertragung zwischen den Busteilnehmern und einem übergeordneten System und/oder den einzelnen Busteilnehmern untereinander galvanisch getrennt realisiert wird. Der Ausdruck "berührungslos" ist hier sowie im gesamten Dokument im elektrischen Sinne zu interpretieren; er besagt also, dass eine galvanische Trennung an der Energieübertragungsschnittstelle und der Datenübertragungsschnittstelle realisiert wird.

Diese galvanische Trennung hat darüber hinaus noch den Vorteil, dass innerhalb der Gehäuse keine Potentialtrennung zwischen den ein- und abgehenden Signalleitungen und dem Datenverarbeitungs- oder Steuerungssystem realisiert werden muss. Da die Busteilnehmer bereits sowohl energietechnisch als auch datentechnisch berührungslos an die Vorrichtung und somit an die Energieversorgungsleitung und den Datenbus angekoppelt sind, müssen derartige Maßnahmen nicht mehr innerhalb des Gehäuses der einzelnen Busteilnehmer vorgesehen werden.

Sowohl für die berührungslose Energieübertragung als auch für die berührungslose Datenübertragung existieren verschiedene physikalische Wirkprinzipien, die in den unterschiedlichsten Ausführungsformen der Erfindung eingesetzt werden können. Die Energieübertragungsschnittstelle weist eine Primärspule zur induktiven Übertragung elektrischer Energie zu einer in dem Busteilnehmer angeordneten Sekundärspule auf. Eine derartige nach dem transformatorischen Prinzip funktionierende Energieübertragung lässt sich in der Regel mit einem sehr hohen Wirkungsgrad umsetzen.

Auch die berührungslose Datenübertragung kann nach induktiven Wirkprinzipien umgesetzt werden. Beispielsweise kann die Primärspule zur induktiven Übertragung von Daten zur Sekundärspule vorgesehen werden, so dass die Energieübertragungsschnittstelle die Funktion der Datenübertragungsschnittstelle erfüllt. Auf diese Art und Weise müssen keine zusätzlichen Spulen für die Datenübertragung in Vorrichtung und Busteilnehmer vorgesehen werden.

Eine vorteilhafte Ausführungsform der Erfindung kennzeichnet sich dadurch, dass die Vorrichtung für jeden gehalterten Busteilnehmer eine eigene Energieübertragungsschnittstelle zu dessen Energieversorgung aufweist. Auf diese Art und Weise können die einzelnen Busteilnehmer parallel an das Versorgungsnetz angekoppelt werden. Im Vergleich zu einem seriellen Aufbau, bei dem die Energie zunächst in einen als Ankoppelmodul dienenden Busteilnehmer eingespeist wird und von dort von Busteilnehmer zu Busteilnehmer seriell durchgeschleift wird, zeichnet sich besagte Ausführungsform durch einen besseren energetischen Wirkungsgrad aus. Eine Kaskadierung der Energieversorgung von Modul zu Modul ist demgegenüber nur bei extrem leistungsarmen Modulen sinnvoll einzusetzen. Weiterhin hat die Zuordnung jeweils einer eigenen Energieübertragungsschnittstelle für jeden Busteilnehmer den Vorteil, dass die Busteilnehmer nicht lückenlos aneinander angekoppelt werden müssen, um die Versorgung jedes einzelnen Busteilnehmers zu ermöglichen. Bei einer seriellen Einspeisung der Energie über ein Ankopplungsmodul bzw. bei einer Kaskadierung der Energieversorgung könnte hingegen eine Lücke zwischen einzelnen Busteilnehmern nicht zugelassen werden, da hierdurch die Energieversorgung hinter der Lücke angeordneter Busteilnehmer unterbrochen würde.

Aus ähnlichen wie den bereits zuvor unter dem Aspekt der Energieversorgung genannten Gründen ist eine Ausführungsform der Erfindung vorteilhaft, bei der die Vorrichtung für jeden gehalterten Busteilnehmer eine eigene Datenübertragungsschnittstelle zu dessen Ankopplung an den Datenbus aufweist. Auch hier wäre eine Alternative dadurch gekennzeichnet, dass die Ankopplung zum Datenbus zunächst nur über ein Ankopplungsmodul geschieht und die Daten für die einzelnen Busteilnehmer kaskadenartig von Busteilnehmer zu Busteilnehmer durchgeschleift werden. Im Gegensatz hierzu hat jedoch die genannte Ausführungsform, bei der die Vorrichtung für jeden gehalterten Busteilnehmer eine eigene Datenübertragungsschnittstelle aufweist, den Vorteil, dass die Kommunikationsfähigkeit auch bei einer Lücke zwischen den Modulen erhalten bleibt.

Bei einer vorteilhaften Ausgestaltungsform der Erfindung weist die Vorrichtung eine Rückplatte mit Einsteckplätzen für die zu halternden Busteilnehmer auf. Die Energieversorgung und die Datenversorgung der einzelnen Busteilnehmer geschehen bei einer solchen Ausführungsform also über eine gemeinsame so genannte "Backplane".

Bei einer derartigen "Backplane-Ausführung" ist eine weitere Ausgestaltung vorteilhaft, bei der die Energieübertragungsschnittstellen und die Datenübertragungsschnittstellen derart angeordnet sind, dass Energie und Daten durch eine der Rückplatte zugewandte Seite des jeweiligen gehalterten Busteilnehmers übertragbar sind.

In weiterer vorteilhafter Ausgestaltung der Erfindung ist die Vorrichtung zur Halterung von Ein/-Ausgabegeräte, insbesondere für die Automatisierungstechnik vorgesehen. Derartige Ein/-Ausgabegeräte, wie sie beispielsweise in der Automatisierungstechnik häufig über einen Datenbus mit einer Speicherprogrammierbaren Steuerung kommunizieren, sind häufig sehr rauen, durch Schmutz und Feuchtigkeit gekennzeichneten Umgebungsbedingungen ausgesetzt.

Auch für einen Busteilnehmer, der in einer der beschriebenen Vorrichtungen halterbar ist und über eine weitere Energieübertragungsschnittstelle und eine weitere Datenübertragungsschnittstelle verfügt, wobei besagte Schnittstellen mit der Energieübertragungsschnittstelle der Vorrichtung bzw. der Datenübertragungsschnittstelle der Vorrichtung koppelbar sind, sind verschiedene Ausführungsformen denkbar und werden von der Erfindung umfasst.

Beispielsweise kennzeichnet sich eine vorteilhafte Ausgestaltung eines derartigen Busteilnehmers dadurch, dass der Busteilnehmer eine Datenkopplungsschnittstelle zur berührungslosen Datenübertragung von dem Busteilnehmer zu einem benachbarten gehalterten Busteilnehmer aufweist. Ein solcher Busteilnehmer ist auch dann innerhalb der Vorrichtung einsetzbar, wenn die Vorrichtung über nur eine Datenübertragungsschnittstelle verfügt, die mit einer entsprechenden Datenübertragungsschnittstelle eines als Ankopplungsmodul dienenden Busteilnehmers koppelbar ist. Durch die Datenkopplungsschnittstelle können so die Daten von Busteilnehmer zu Busteilnehmer weitergereicht werden.

Besagte Datenkopplungsschnittstelle kann durch unterschiedliche physikalische Prinzipien realisiert werden. Eine vorteilhafte Ausgestaltung der Erfindung ist beispielsweise dadurch gekennzeichnet, dass die Datenkopplungsschnittstelle Mittel zur induktiven, optischen oder kapazitiven Datenübertragung zwischen dem Busteilnehmer und dem benachbarten Busteilnehmer aufweist. Insbesondere bei hohen Datenraten ist eine optische Datenübertragung oder auch eine kapazitive Datenübertragung der induktiven Datenübertragung vorzuziehen.

Auch für die Energieversorgung muss die Vorrichtung nur eine Energieübertragungsschnittstelle aufweisen, wenn in vorteilhafter Ausgestaltung der Erfindung der Busteilnehmer eine Energiekopplungsschnittstelle zur berührungslosen, insbesondere induktiven Energieübertragung von dem Busteilnehmer zu einem benachbarten gehalterten Busteilnehmer aufweist. Eine derartige kaskadierte Ausführung, bei der die Energie von Busteilnehmer zu Busteilnehmer durchgeschleift wird, ist jedoch nur bei relativ leistungsschwachen Busteilnehmern zweckmäßig, da die Verlustleistung hierbei überproportional mit der Anzahl der Busteilnehmer steigt.

Für viele Anwendungen ist eine vorteilhafte Ausgestaltung des Busteilnehmers dadurch gekennzeichnet, dass der Busteilnehmer als ein Ausgabegerät insbesondere für die Automatisierungstechnik ausgeführt ist.

Im Folgenden wird die Erfindung anhand der in den Figuren dargestellten Ausführungsbeispiele näher beschrieben und erläutert.

Es zeigen:
- FIG 1: eine als Rückplatte ausgeführte Vorrichtung zur mechanischen Halterung, elektrischen Energieversorgung und Datenversorgung eines Busteilnehmers,
- FIG 2: ein in der Vorrichtung nach Figur 1 halterbarer Busteilnehmer,
- FIG 3: ein als Ankopplungsmodul ausgeführter Busteilnehmer,
- FIG 4: eine schematische Darstellung eines Bussystems mit Busteilnehmern und einer Vorrichtung zu deren Halterung und Energie- und Datenversorgung,
- FIG 5: eine erste Ausführung eines kontaktlosen induktiven Signalübertragers im offenen Zustand,
- FIG 6: der unter Figur 5 gezeigte induktive Signalübertrager im geschlossenen Zustand,
- FIG 7: eine zweite Ausführung eines kontaktlosen induktiven Signalübertragers, und
- FIG 8: eine dritte Ausführung eines kontaktlosen induktiven Signalübertragers.

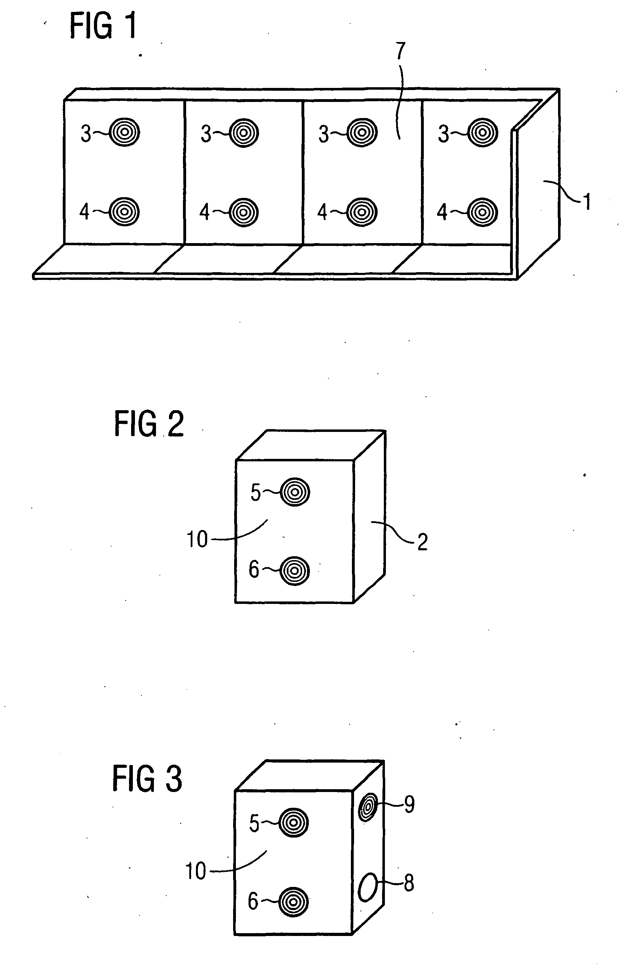

Figur 1 zeigt eine mit einer Rückplatte 7 ausgeführte Vorrichtung 1 zur mechanischen Halterung, elektrischen Energieversorgung und Datenversorgung eines Busteilnehmers. Die als Backplane ausgeführte Vorrichtung 1 umfasst vier Einsteckplätze, so dass vier Busteilnehmer, beispielsweise Ein-/Ausgabemodule, wie sie in der Automatisierungstechnik verwendet werden, eingesteckt werden können.

Für jeden Busteilnehmer sind in der Rückplatte 7 jeweils eine Energieübertragungsschnittstelle 3 und eine Datenübertragungsschnittstelle 4 vorgesehen. Die Energieübertragungsschnittstelle 3 dient der elektrischen Energieversorgung der jeweiligen gehalterten Busteilnehmer und die Datenübertragungsschnittstelle 4 deren Ankopplung an einen Datenbus, über den die gehalterten Busteilnehmer beispielsweise mit einer speicherprogrammierbaren Steuerung (SPS) kommunizieren können. Die Energieübertragungsschnittstelle 3 umfasst eine Primärspule, über die die elektrische Energie nach dem transformatorischen Prinzip in einen gehalterten Busteilnehmer übertragen werden kann, sofern dieser eine entsprechende Sekundärspule aufweist, die von dem mittels der Primärspule erzeugten magnetischen Fluss durchsetzt wird. Zur Verbesserung des Wirkungsgrades kann innerhalb der Vorrichtung und/oder innerhalb des Busteilnehmers ein Eisenkern vorgesehen werden, der zur Minimierung des Streuflusses dient.

Obwohl die Energieübertragungsschnittstelle 3 prinzipiell auch so ausgelegt werden kann, dass sie auch zur Ankopplung der Busteilnehmer an den Datenbus dient, umfasst die Vorrichtung 1 für jeden Busteilnehmer eine eigene Datenübertragungsschnittstelle 4. In den dargestellten Beispielen ist auch die Datenübertragungsschnittstelle 4 zur induktiven Datenübertragung vorgesehen. Die getrennte Daten- und Energieübertragung hat den Vorteil, dass beide Magnetkreise unabhängig voneinander optimiert werden können und so höhere Wirkungsgrade und höhere Datenübertragungsraten erzielt werden können.

Die dargestellte Vorrichtung 1 ermöglicht es, vollständig hermetisch gekapselte Busteilnehmer mit Energie und Daten zu versorgen. Damit sind die Busteilnehmer nahezu ideal vor Verunreinigungen und Feuchtigkeit geschützt. Eine derartige hermetische Kapselung kann insbesondere unter hygienischen Gesichtspunkten vorteilhaft sein, da eine intensive Reinigung der Busteilnehmer ohne Gefahr des Eindringens von Reinigungsmitteln in das Gerät ermöglicht wird. Dies kann beispielsweise im Lebensmittelbereich, der Pharmazie und der Chemie von entscheidender Bedeutung sein.

Die vorgeschlagene induktive Speisung der Module hat darüber hinaus den Vorteil, dass Funkenbildung sicher vermieden werden kann. Dies ist insbesondere bei explosionsgefährdeten Anwendungen, wie sie in der Prozesstechnik oder Petrochemie vorkommen, äußerst wichtig.

Bei der gezeigten Vorrichtung sind für jedes halterbare Modul eine Energieübertragungsschnittstelle 3 und eine Datenübertragungsschnittstelle 4 vorgesehen. Dies hat den Vorteil, dass die Steckplätze unabhängig voneinander bestückbar sind. Es dürfen auch Lücken innerhalb der Rückplatte 7 gelassen werden, da hierdurch die Strom- und Datenversorgung der gehalterten Busteilnehmer nicht gefährdet wird.

Das gezeigte induktive Verfahren zur Energie- und Datenübertragung kann auch sehr vorteilhaft dazu genutzt werden, die Anwesenheit bzw. das Entfernen einzelner Busteilnehmer zu detektieren. So kann auch die Leistungsübertragung abhängig von der Anwesenheit des jeweiligen Busteilnehmers gezielt aktiviert oder deaktiviert werden, um Verlustleistung wie beispielsweise die Leerlaufleistung einer in der Rückplatte 7 angeordneten Primärspule zu reduzieren.

Figur 2 zeigt einen in der Vorrichtung 1 nach Figur 1 halterbaren Busteilnehmer 2. Dargestellt ist die Rückansicht des Busteilnehmers 2. Auf der Rückseite 10 des Busteilnehmers 2 sind eine weitere Energieübertragungsschnittstelle 5 und eine weitere Datenübertragungsschnittstelle 6 angebracht, die mit der Energieübertragungsschnittstelle 3 bzw. der Datenübertragungsschnittstelle 4 der Vorrichtung 1 zu jeweils einem Übertrager koppelbar sind. Busteilnehmer 2 und Vorrichtung 1 sind mechanisch derart aufeinander abgestimmt, dass nach Einstecken des Busteilnehmers 2 in einen dafür vorgesehenen Einsteckplatz der Rückplatte 7 die jeweiligen Spulen der Vorrichtung 1 und des Busteilnehmers 2 in einer Achse liegen und somit magnetisch miteinander gekoppelt sind. Auf diese Art und Weise können nach dem Einstecken des Busteilnehmers 2 in die Vorrichtung 1 Energie und Daten induktiv zwischen Vorrichtung 1 und Busteilnehmer 2 ausgetauscht werden.

Figur 3 zeigt einen als Ankopplungsmodul ausgeführten Busteilnehmer, der neben der weiteren Energie- und Datenübertragungsschnittstellen 5, 6 eine Datenkopplungsschnittstelle 8 und eine Energiekopplungsschnittstelle 9 aufweist. Es ist wiederum eine Ansicht auf die Rückseite 10 des Busteilnehmers 2 gegeben.

Mit der Datenkopplungsschnittstelle 8 können Daten zwischen dem Ankopplungsmodul und einem innerhalb der Vorrichtung 1 benachbarten Busteilnehmer berührungslos ausgetauscht werden. Beispielsweise kann die Datenkopplungsschnittstelle 8 hierzu zur optischen Datenübertragung ausgeführt sein. Der benachbarte Busteilnehmer braucht in diesem Fall keine eigene weitere Datenübertragungsschnittstelle, mit der er an den Datenbus über die Vorrichtung ankoppelbar wäre. Vielmehr werden von dem Ankopplungsmodul die Daten über die Datenkopplungsschnittstelle 8 von Modul zu Modul weitergereicht. Um eine unterbrechungsfreie Datenübertragung zu ermöglichen, dürfen hierbei jedoch keine Lücken zwischen den eingesteckten Busteilnehmern vorhanden sein.

Das dargestellte Ankopplungsmodul verfügt darüber hinaus über eine induktiv ausgeführte Energiekopplungsschnittstelle 9, über die Energie zu einem benachbarten Busteilnehmer induktiv übertragen werden kann, so dass auch dieser keine eigene Energieübertragungsschnittstelle benötigt, über die er seine Energie von der Vorrichtung beziehen könnte. Auch die Energie wird somit von benachbartem Busteilnehmer zu benachbartem Busteilnehmer berührungslos durchgeschleift. Aufgrund der hierbei überproportional steigenden Verlustleistung eignet sich eine derartige kaskadenartige Energieversorgung jedoch nur bei Busteilnehmern geringen Leistungsbedarfs.

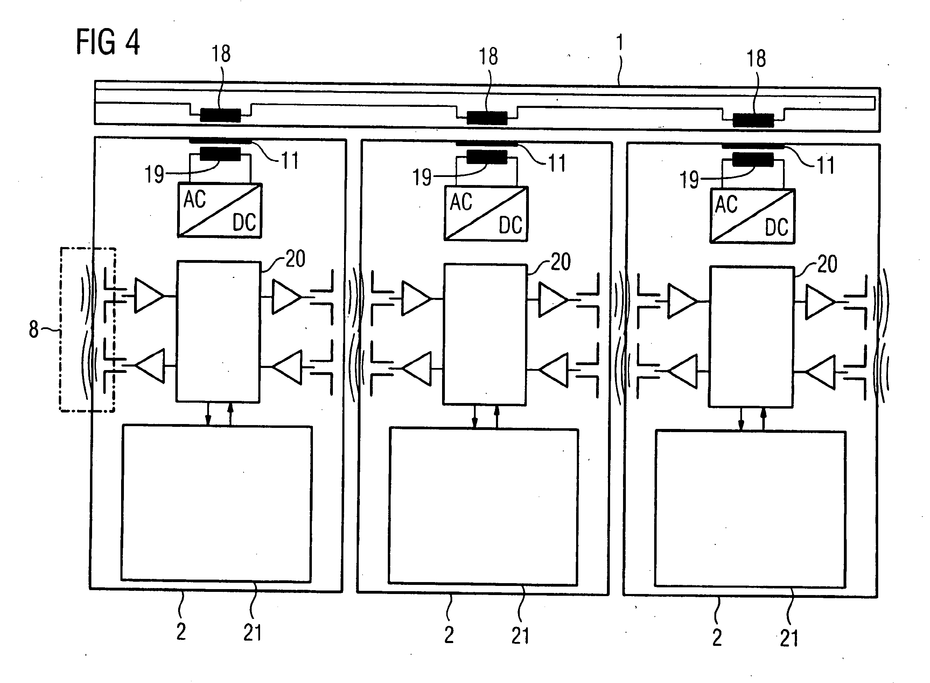

Figur 4 zeigt eine schematische Darstellung eines Bussystems mit Busteilnehmern 2 und einer Vorrichtung 1 zu deren Halterung und Energie- und Datenversorgung. Die einzelnen Busteilnehmer 2 werden transformatorisch mit Energie aus der Vorrichtung 1 versorgt. Hierzu ist jeweils ein Transformator vorgesehen, dessen Primärwicklung 18 innerhalb der Vorrichtung 1 angeordnet ist und dessen Sekundärvorrichtung 19 sich innerhalb der Busteilnehmer 2 befindet. Zur Verbesserung der magnetischen Kopplung befindet sich jeweils ein Eisenkern 11 innerhalb des Gehäuses der einzelnen Busteilnehmer.

Da die Busteilnehmer 2 eine Gleichspannungsversorgung benötigen, sind den jeweiligen Transformatoren Gleichrichter nachgeschaltet.

Zur Datenübertragung weisen die einzelnen Busteilnehmer 2 Datenkopplungsschnittstellen 8 auf, die über eine Sende- und Empfangslogik 20 angesteuert werden und über die die einzelnen Busteilnehmer 2 miteinander kommunizieren können. Die Sende- und Empfangslogik 20 kommuniziert hingegen drahtgebunden mit einer beispielsweise als Mikrokontroller ausgeführten Verarbeitungseinheit 21 der Ein-/Ausgabegeräte.

Die Datenübertragung zwischen den Busteilnehmern 2 kann induktiv, über ein Hochfrequenz-Nachfeld, über Funk oder auch optisch realisiert werden. Vorteil der induktiven Datenübertragung ist, dass sie äußerst robust gegenüber Verschmutzung und Feuchtigkeit ist, bezüglich elektromagnetischer Verträglichkeit eher unempfindlich im Vergleich zur Nahfeld- und Funkübertragung ist, und bezüglich Aufwand und Kosten als relativ günstig einzuschätzen ist.

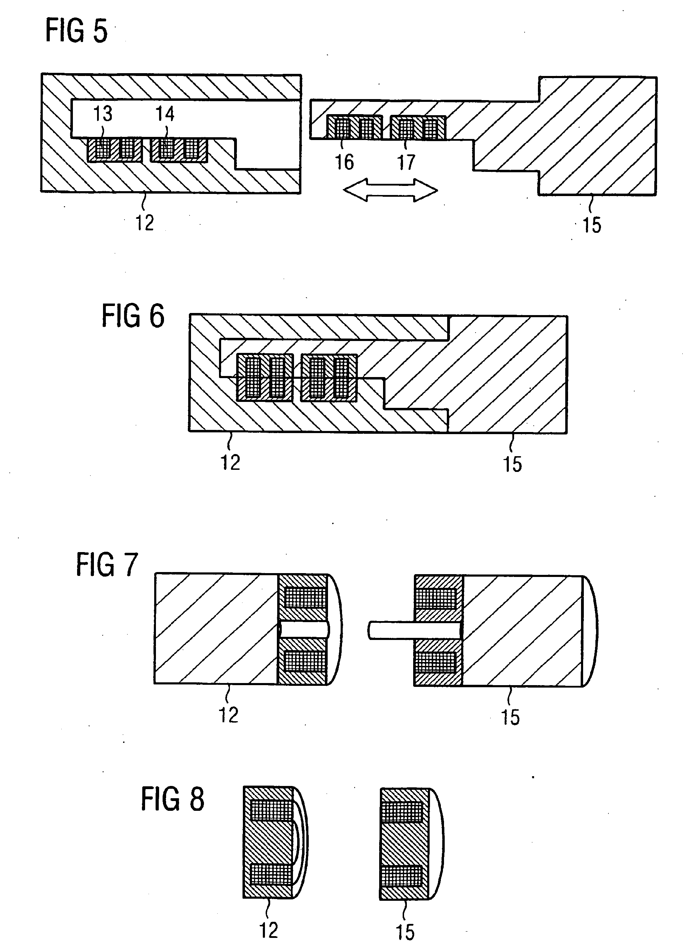

Figur 5 zeigt eine erste Ausführung eines kontaktlosen induktiven Signalübertragers im offenen Zustand. Ein erster Teil 12 des Signalübertragers, der Bestandteil einer Ausführung der erfindungsgemäßen Vorrichtung 1 ist, weist zwei Primärspulen 13, 14 auf. Ein zweiter Teil 15 des Signalübertragers weist zwei Sekundärspulen 16, 17 auf und stellt einen Bestandteil einer Ausführungsform des erfindungsgemäßen Busteilnehmers 2 dar. Der zweite Teil 15 des Signalübertragers ist in den ersten Teil 12 einschiebbar.

Figur 6 zeigt den unter Figur 5 gezeigten induktiven Signalübertrager in geschlossenem Zustand. Die beiden Primärspulen 13, 14 bilden nun mit den Sekundärspulen 16, 17 jeweils einen Transformator, über den induktiv Daten zwischen der Vorrichtung 1 und dem Busteilnehmer 2 übertragen werden können.

Figur 7 zeigt eine zweite Ausführung eines kontaktlosen induktiven Signalübertragers, bei der ein erster Teil 12 des Signalübertragers, der Bestandteil einer weiteren vorteilhaften Ausführungsform der erfindungsgemäßen Vorrichtung 1 ist, zylindrisch in einen zweiten Teil 15, der Bestandteil einer weiteren Ausführungsform des erfindungsgemäßen Busteilnehmers ist, zum Schließen eines magnetischen Kreises eingreifen kann.

Schließlich zeigt Figur 8 eine dritte Ausführung eines kontaktlosen induktiven Signalübertragers, der ebenfalls aus zwei zylindrisch miteinander verbindbaren Teilen 12, 15 gebildet wird.

## Patentansprüche

1. Vorrichtung (1) zur mechanischen Halterung von Busteilnehmern eines Datenbusses, wobei die Vorrichtung mindestens eine Energieübertragungsschnittstelle (3) zur berührungslosen Energieversorgung mindestens eines der gehalterten Busteilnehmer und mindestens eine Datenübertragungsschnittstelle (4) zur berührungslosen Ankopplung des mindestens einen gehalterten Busteilnehmers an den Datenbus aufweist, und wobei die Energieübertragungsschnittstelle (3) eine Primärspule zur induktiven Übertragung elektrischer Energie zu einer in dem Busteilnehmer (2) angeordneten Sekundärspule (16,17) aufweist,
**dadurch gekennzeichnet , dass** die Primärspule zur induktiven Übertragung von Daten zur Sekundärspule vorgesehen ist, so dass die Energieübertragungsschnittstelle (3) die Funktion der Datenübertragungsschnittstelle (4) erfüllt.

2. Vorrichtung (1) nach Anspruch 1,
wobei die Vorrichtung (1) für jeden gehalterten Busteilnehmer eine eigene Energieübertragungsschnittstelle (3) zu dessen Energieversorgung und eine eigene Datenübertragungsschnittstelle (4) zu dessen Ankopplung an den Datenbus aufweist.

3. Vorrichtung (1) nach Anspruch 1 oder 2,
wobei die Vorrichtung eine Rückplatte (7) mit Einsteckplätzen für die zu halternden Busteilnehmer (2) aufweist.

4. Vorrichtung (1) nach Anspruch 3,
wobei die Energieübertragungsschnittstellen (3) und die Datenübertragungsschnittstellen (4) derart angeordnet sind, dass Energie und Daten durch eine der Rückplatte zugewandte Seite des jeweiligen gehalterten Busteilnehmers übertragbar sind.

5. Vorrichtung (1) nach einem der vorhergehenden Ansprüche, wobei die Vorrichtung (1) zur Halterung von Ein- /Ausgabegeräten vorgesehen ist.

6. Vorrichtung (1) nach Anspruch 5,
wobei die Vorrichtung (1) zur Halterung von Ein- /Ausgabegeräten für die Automatisierungstechnik vorgesehen ist.

7. Busteilnehmer (2) mit Halterungsmitteln zur Halterung des Busteilnehmers (2) an einer Vorrichtung (1) nach einem der Ansprüche 1 bis 6,. wobei der Busteilnehmer (2)
- eine weitere Energieübertragungsschnittstelle (5) aufweist, die mit der Energieübertragungsschnittstelle (3) der Vorrichtung (1) zur berührungslosen Energieübertragung koppelbar ist,
- eine weitere Datenübertragungsschnittstelle (6) aufweist, die mit der Datenübertragungsschnittstelle (4) der Vorrichtung (1) zur berührungslosen Ankopplung des Busteilnehmers (2) an den Datenbus koppelbar ist
**dadurch gekennzeichnet , dass** der Busteilnehmer (2) eine Datenkopplungsschnittstelle (8) zur berührungslosen Datenübertragung von dem Busteilnehmer (2) zu einem benachbarten gehalterten Busteilnehmer aufweist.

8. Busteilnehmer (2) nach Anspruch 7,
wobei die Datenkopplungsschnittstelle (8) Mittel zur induktiven, optischen oder kapazitiven Datenübertragung zwischen dem Busteilnehmer (2) und dem benachbarten Busteilnehmer aufweist.

9. Busteilnehmer (2) nach einem der Ansprüche 7 oder 8,
wobei der Busteilnehmer (2) eine Energiekopplungsschnittstelle (9) zur berührungslosen Energieübertragung von dem Busteilnehmer (2) zu einem benachbarten gehalterten Busteilnehmer aufweist.

10. Busteilnehmer (2) nach Anspruch 9,
wobei die Energiekopplungsschnittstelle (9) zur induktiven Energieübertragung ausgebildet ist.

11. Busteilnehmer (2) nach einem der Ansprüche 7 bis 10,
wobei der Busteilnehmer (2) als Ein-/Ausgabegerät ausgeführt ist.

12. Busteilnehmer (2) nach Anspruch 11,
wobei der Busteilnehmer (2) als Ein-/Ausgabegerät für die Automatisierungstechnik ausgeführt ist.

## Claims

1. Device (1) for the mechanical mounting of bus nodes of a data bus, the device having at least one power transmission interface (3) for the contactless supply of power to at least one of the mounted bus nodes and at least one data transmission interface (4) for the contactless coupling of the at least one mounted bus node to the data bus, and the power transmission interface (3) having a primary coil for the inductive transmission of electrical power to a secondary coil (16, 17) disposed in the bus node (2),
**characterised in that** the primary coil is provided for the inductive transmission of data to the secondary coil, such that the power transmission interface (3) fulfils the function of the data transmission interface (4).

2. Device (1) according to claim 1,
the device (1) having a separate power transmission interface (3) for each mounted bus node for supplying power thereto and a separate data transmission interface (4) for coupling said mounted bus node to the data bus.

3. Device (1) according to claim 1 or 2,
the device having a backplate (7) with plug-in locations for the bus nodes (2) to be mounted.

4. Device (1) according to claim 3,
the power transmission interfaces (3) and the data transmission interfaces (4) being disposed such that power and data can be transmitted through a side of the respective mounted bus node facing the backplate.

5. Device (1) according to one of the preceding claims,
the device (1) being provided for mounting input/output devices.

6. Device (1) according to claim 5,
the device (1) being provided for mounting input/output devices for automation engineering.

7. Bus node (2) with mounting means for mounting the bus node (2) on a device (1) according to one of claims 1 to 6, the bus node (2)
- having a further power transmission interface (5) which can be coupled to the power transmission interface (3) of the device (1) for the contactless transmission of power,
- having a further data transmission interface (6) which can be coupled to the data transmission interface (4) of the device (1) for the contactless coupling of the bus node (2) to the data bus,
**characterised in that** the bus node (2) has a data coupling interface (8) for the contactless transmission of data from the bus node (2) to an adjacent mounted bus node.

8. Bus node (2) according to claim 7,
the data coupling interface (8) having means for the inductive, optical or capacitive transmission of data between the bus node (2) and the adjacent bus node.

9. Bus node (2) according to one of claims 7 or 8,
the bus node (2) having a power coupling interface (9) for the contactless transmission of power from the bus node (2) to an adjacent mounted bus node.

10. Bus node (2) according to claim 9,
the power coupling interface (9) being designed for the inductive transmission of power.

11. Bus node (2) according to one of claims 7 to 10, the bus node (2) being designed as an input/output device.

12. Bus node (2) according to claim 11,
the bus node (2) being designed as an input/output device for automation engineering.

## Revendications

1. Dispositif (1) de fixation mécanique de participants d'un bus de données, le dispositif comportant au moins une interface de transfert d'énergie (3) pour l'alimentation en énergie sans contact d'au moins l'un des participants de bus fixés et au moins une interface de transfert de données (4) pour le couplage sans contact du au moins un participant de bus fixé au bus de données, et l'interface de transfert d'énergie (3) comportant une bobine primaire pour le transfert inductif d'énergie électrique vers une bobine secondaire (16, 17) disposée dans le participant de bus (2),
**caractérisé en ce que**
la bobine primaire est prévue pour le transfert inductif de données vers la bobine secondaire, de sorte que l'interface de transfert d'énergie (3) remplit la fonction de l'interface de transfert de données (4).

2. Dispositif (1) selon la revendication 1,
le dispositif (1) comportant, pour chaque participant de bus fixé, une propre interface de transfert d'énergie (3) pour l'alimentation en énergie de celui-ci et une propre interface de transfert de données (4) pour le couplage de celui-ci au bus de données.

3. Dispositif (1) selon les revendications 1 ou 2,
le dispositif comportant une plaque arrière (7) pourvue d'emplacements d'enfichage pour les participants de bus (2) à fixer.

4. Dispositif (1) selon la revendication 3,
les interfaces de transfert d'énergie (3) et les interfaces de transfert de données (4) étant disposées de façon à permettre le transfert d'énergie et de données par un côté tourné vers la plaque arrière du participant de bus fixé respectif.

5. Dispositif (1) selon l'une des revendications précédentes, le dispositif (1) étant prévu pour la fixation d'unités d'entrée/sortie.

6. Dispositif (1) selon la revendication 5,
le dispositif (1) étant prévu pour la fixation d'unités d'entrée/sortie pour la technique d'automatisation.

7. Participant de bus (2) pourvu de moyens de fixation pour la fixation du participant de bus (2) sur un dispositif (1) selon l'une des revendications 1 à 6, le participant de bus (2) comportant
- une autre interface de transfert d'énergie (5), laquelle peut être couplée avec l'interface de transfert d'énergie (3) du dispositif (1) pour le transfert d'énergie sans contact,
- une autre interface de transfert de données (6), laquelle peut être couplée avec l'interface de transfert de données (4) du dispositif (1) pour le couplage sans contact du participant de bus (2) au bus de données,
**caractérisé en ce que**
le participant de bus (2) comporte une interface de couplage de données (8) pour le transfert de données sans contact du participant de bus (2) vers un participant de bus fixé voisin.

8. Participant de bus (2) selon la revendication 7, l'interface de couplage de données (8) comportant des moyens de transfert de données inductif, optique ou capacitif entre le participant de bus (2) et le participant de bus voisin.

9. Participant de bus (2) selon l'une des revendications 7 ou 8,
le participant de bus (2) comportant une interface de couplage d'énergie (9) pour le transfert d'énergie sans contact du participant de bus (2) vers un participant de bus fixé voisin.

10. Participant de bus (2) selon la revendication 9, l'interface de couplage d'énergie (9) étant conçue pour le transfert d'énergie inductif.

11. Participant de bus (2) selon l'une des revendications 7 à 10,
le participant de bus (2) étant exécuté sous forme d'unité d'entrée/sortie.

12. Participant de bus (2) selon la revendication 11,
le participant de bus (2) étant exécuté sous forme d'unité d'entrée/sortie pour la technique d'automatisation.
